# EUROPEAN PATENT SPECIFICATION

(11) **EP 3 173 635 B1**
(45) Date of publication and mention of the grant of the patent: **22.09.2021**
(21) Application number: 16193197.7
(22) Date of filing: 11.10.2016
(51) Int. Cl.: F16B 19/10

(54) **BLIND RIVET JOINT AND BLIND RIVETING METHOD**
BLINDNIETANORDNUNG UND BLINDNIETVERFAHREN
DISPOSITIF DE RIVET AVEUGLE ET PROCÉDÉ DE RIVETAGE AVEUGLE

(30) Priority: 24.11.2015 DE 102015120278
(43) Date of publication of application: 31.05.2017
(73) Proprietor: Newfrey LLC, New Britain, CT 06053 (US)
(72) Inventor: Schneider, Stefan, 35394 Giessen (DE); Schmitt, Andreas, 35394 Giessen (DE); Lutz, Oliver, 35394 Giessen (DE)
(74) Representative: Hurtig, Nahéma

(56) References cited:
- US-A- 4 639 175
- US-A1- 2015 192 161
- None

## Description

The present invention relates to a blind rivet arrangement (being as such not claimed) for producing a blind rivet joint, having a rivet body and having a mandrel, wherein the rivet body has a rivet head, a rivet shank and a rivet hole, wherein the mandrel has a mandrel head and a mandrel shank, which is introduced into the rivet hole, with the result that the mandrel head rests positively on the rivet shank, wherein the rivet head has a head underside surface which faces the rivet shank and, adjacent to the rivet shank, has a minimum outside diameter and, remote from the rivet shank, has a maximum outside diameter.

The present invention furthermore relates to a blind rivet joint having at least one visible-side workpiece and one blind-side workpiece, which form a workpiece arrangement, and having a formed set blind rivet arrangement of the type designated above.

Finally, the present invention relates to a method for producing a blind rivet joint, in which at least one visible-side workpiece and one blind-side workpiece are joined by means of a folding-body blind rivet arrangement.

Blind rivet arrangements of this kind are known from document WO 2009/098431 A1 and are used to join workpieces, wherein access is possible from only one side (the visible side). In this case, the blind rivet is introduced with the blind-side mandrel head through pre-prepared holes in the workpieces to be joined. The setting or joining operation then takes place, in which the mandrel is pulled away from the workpiece arrangement on the visible side (e.g. by means of blind riveting pliers). On the blind side, this leads to deformation of the rivet shank and to the formation of a blind head, which rests on the blind-side workpiece surface after setting. In general, the mandrel shank in this case has a predetermined breaking point, with the result that the mandrel shank projecting on the visible side breaks off after the setting operation has been carried out and can be removed. In the process, the rivet head, sometimes also referred to as a set head, remains on the visible side. The rivet head rests by means of a head underside surface, which is generally flat, on a flat visible-side surface of the visible-side workpiece.

It is also known that an opening can be countersunk in the visible-side workpiece and that the head underside surface can be designed as a conical surface (e.g. US 7,650,681 B1). It is thereby possible to ensure that the rivet head is accommodated completely in the countersink in the visible-side workpiece and that the upper side of the rivet head is aligned flush with the visible-side surface of the visible-side workpiece. An embodiment of this kind may be preferred particularly for optical reasons or for reasons connected with improved machinability of the visible-side surfaces.

Document US 2015/0192161 A1 relates to a blind rivet having sealing and water-tightness features. The blind rivet is fastenable to a member having an opening and includes a rivet body and mandrel. The rivet body has a flange having a large diameter, a taper portion which is adjacent the flange and a sleeve which extends along the axial direction from the taper portion. A hole having a bottom is formed from the surface of the flange to the bottom of the sleeve. The mandrel has a head. The head of the mandrel is disposed at the bottom portion of the hole. A thick portion is formed at a portion of the sleeve, and thus the head is irremovably held in the hole. The mandrel is pulled, the sleeve is enlarged, and a substrate is sealed between the enlarged portion and the flange. A sealing structure using the blind rivet is also provided.

Blind rivet joints are generally produced by means of hand-held, manual blind riveting tools, generally so-called "blind riveting guns", which can exert a pressing force on the upper side of the rivet head and can grip a withdrawal section of the mandrel shank and pull it out against the pressing force until the mandrel shank breaks at the predetermined breaking point.

In one type of blind rivet arrangement, provision is made for the rivet shank to expand radially within the through openings in the workpieces. This leads to positive engagement in the radial direction. However, this generally means that the through openings in the first and the second workpiece (and, where applicable, further workpieces) must not exceed a certain maximum dimension. Moreover, radially expanding blind rivet arrangements of this kind can be implemented only with workpieces which have a relatively high strength and usually consist of metal, since the radial expansion forces could otherwise damage the workpieces. The blind head (also referred to as the "closing head") can also be relatively small in the case of radially expanding blind rivet arrangements. This leads to relatively low tensile strengths of the head.

Another disadvantage of radially expanding blind rivet arrangements is that it is generally not possible to remove the blind rivet arrangement, e.g. by drilling, without damaging the workpiece arrangement. In many cases, it is necessary to expend a large amount of force to drive a residual piece of the rivet out of the hole in the workpiece arrangement towards the blind side. Alternatively, the residual piece of the rivet is cut up completely, with the risk that the drill will run away sideways and the workpiece arrangement will be damaged.

Blind rivet arrangements which form "non-positive joints" are furthermore known. With these blind rivet arrangements, the visible-side and the blind-side workpiece are essentially joined together by exerting an axial clamping force on the workpiece arrangement via the rivet head (set head) and the blind head (closing head) in order to join them non-positively in the radial direction. Here, the clamping force is dependent on the setting force, which corresponds approximately to the breaking force of the rivet mandrel, and on the spring stiffness of the blind rivet arrangement and of the workpiece arrangement. In the case of a blind rivet joint which forms a non-positive joint, high raising moments during riveting and high tensile strengths of the head in the joint can be achieved owing to the substantially disc-shaped design of the blind head. Moreover, this type of blind rivet arrangement can have advantages when removing a residual piece of the rivet from the joint since such a residual piece of the rivet can be pushed out to the blind side with little force.

Tilting during the riveting operation can be a problem with such blind rivet arrangements, potentially reducing a permanent clamping force. If blind rivet arrangements of this kind which form a joint involving radial non-positive engagement are processed at an angle of inclination (in relation to a longitudinal axis of the joint) and without the possibility of corrective adjustment, a rivet head may come into contact with the visible-side surface of the visible-side workpiece only with a circumferential segment. This can lead to high unit surface pressures, with the risk that there will be plastic deformation and/or that the joint will settle and thus come apart. In the completed blind rivet joint, it will furthermore generally be possible for liquid to pass through.

Rivets which form a joint involving non-positive engagement can be designed as "folding-body" rivets, in particular. In this case, an outer circumference of the rivet shank can be shaped in such a way that it forms an outwardly deformed fold owing to the axial setting force, leading to a kind of disc-shaped blind head (closing head).

Folding-body blind rivet arrangements of this kind can preferably be designed as multi-range rivets, allowing workpiece arrangements of different axial thicknesses to be joined together by the same type of blind rivet arrangement.

One example of a folding-body blind rivet arrangement is known from document DE 10 2011 113 362 A1. Document DE 10 2014 101 110 A1 discloses another blind rivet arrangement, which relies essentially on an axial clamping force to set up a radial non-positive joint. The same applies to a multi-range blind rivet of the kind disclosed by document US 8,851,813 B1.

Document US 7,650,681 B2 discloses a blind rivet arrangement which has a conical rivet head that is introduced into a conical through opening in order to ensure that the rivet head is formed substantially flush with the visible-side surface.

Document US-A-5,689,873 discloses a fastening device which serves as a tacking fastener. A rivet head is of conical shape. A blind head is furthermore shaped so as to taper at an acute angle, thus allowing the blind head to be pulled completely through the rivet body. This blind rivet arrangement can then subsequently be drilled out in a simple manner as soon as the workpiece arrangement is joined by permanent fastening elements. Here, the conical shape of the head underside surface is intended to ensure centring, even if a hole diameter of the workpiece arrangement differs from a desired dimension. Owing to the fact that the blind head is pulled through the rivet hole during the fastening operation there is radial expansion in the hole in the workpiece arrangement, the fastening arrangement thus involving radial expansion and allowing a positive joint.

Given this background situation, it is an object of the invention to indicate an improved blind rivet joint and an improved method for producing a blind rivet joint.

The above object is achieved by a blind rivet joint of claim 1, having at least one visible-side workpiece and one blind-side workpiece and having a formed set blind rivet arrangement of the type according to the invention, wherein a part of the rivet head projects relative to a visible surface of the visible-side workpiece.

The above object is furthermore achieved by a method for producing a blind rivet joint of claim 8, in which at least one visible-side workpiece and one blind-side workpiece are joined by means of a folding-body blind rivet arrangement, in particular by means of a blind rivet arrangement according to the invention, having the following steps:
- making available the visible-side and the blind-side workpiece, wherein the visible-side workpiece has a first through opening having a first opening diameter and wherein the blind-side workpiece has a second through opening having a second opening diameter, wherein the through openings define a longitudinal axis of the joint,
- introducing the as yet unformed blind rivet arrangement into the through openings, wherein the blind rivet arrangement has a rivet head having a contact surface, which slopes relative to a rivet longitudinal axis and which is of a size matched to the first opening diameter in such a way that at least a partial annular segment of the contact surface rests on a circumferential edge of the first through opening, said edge being formed on a visible surface of the visible-side workpiece, wherein an actual angle of inclination between the longitudinal axis of the joint and the rivet longitudinal axis is less than a maximum angle of inclination;
- forming the blind rivet arrangement to produce the blind rivet joint, wherein a blind-side rivet head is formed, which engages behind a blind-side surface of the blind-side workpiece, wherein, in the case of an actual angle of inclination of greater than or equal to 0°, a complete annular segment of the contact surface rests on the circumferential edge of the first through opening and a part of the rivet head projects relative to the visible surface of the visible-side workpiece.

Finally, there is disclosed the use of a folding-body blind rivet arrangement, which has a rivet body and a mandrel, wherein the rivet body has a rivet shank and a rivet head having a contact surface, which faces the rivet shank and, adjacent to the rivet shank, has a smaller outside diameter than it does at a location remote from the rivet shank, in particular a blind rivet arrangement of the type according to the invention, more specifically for producing a blind rivet joint, in which at least one blind-side workpiece and one visible-side workpiece are joined to one another, wherein an annular segment of the contact surface rests on a circumferential edge of a through opening in the visible-side workpiece.

The blind rivet arrangement is preferably designed in such a way that, as it is set (formed), a blind head is formed, this being brought about in particular by folding deformation of the rivet shank, wherein the mandrel head remains in the blind rivet joint to be produced after the breaking of a predetermined breaking point. Consequently, the blind rivet arrangement is designed especially for producing permanent blind rivet joints.

In the simplest case, the head underside surface can be a conical surface. However, it can also be a spherical surface, which is shaped so as to protrude outwards, the head underside surface being designed in the manner of a spherical segment. However, the head underside surface can also be designed as a fillet.

The head underside surface can be a smooth surface, but can also be designed with longitudinal ribs or with other raised and/or recessed contours. The head underside surface can also be partially axially slotted.

The contact surface of the head underside surface preferably extends from an axial region in which a diameter of the head underside surface is greater than an outside diameter of the rivet shank as far as the intermediate outside diameter. The axial region from the intermediate outside diameter as far as the maximum outside diameter of the head underside surface consequently projects axially relative to a visible-side surface of the visible-side workpiece of the riveted workpiece arrangement when a blind rivet joint has been produced by means of the blind rivet arrangement. This section which projects relative to the visible side is also referred to as a protruding section. In the protruding section, the head underside surface can also deviate from a conical or spherical surface.

The fact that a minimum outside diameter of the contact surface is greater than an outside diameter of the rivet shank ensures that the rivet head always rests by means of the contact surface on the circumferential edge of a through opening once the blind rivet joint has been produced, with the result that the rivet head virtually always projects some way into the through opening in the visible-side workpiece.

The through opening in the visible-side workpiece is preferably designed as a hole, which is not countersunk in the region of the visible-side surface thereof.

The blind rivet arrangement is designed as a folding-body blind rivet arrangement.

In this case, the blind rivet arrangement is preferably designed as a multi-range blind rivet arrangement, allowing workpiece arrangements of different thicknesses to be riveted with the same type of blind rivet arrangement.

Fundamentally, the blind rivet arrangement is designed as a blind rivet arrangement which forms a non-positive joint. In other words, the blind rivet arrangement is not designed in such a way that the rivet shank expands radially within the through opening in the workpiece during the setting operation in order in this way to achieve radial positive engagement between the workpieces.

On the contrary, the axially positive joint formed by the rivet head on the visible side and a closing head (blind head) which deforms outwards in the manner of a fold sets up a high axial clamping force, which establishes a radially non-positive joint. On the one hand, this can lead to high tensile strengths of the head and, on the other hand, it can also lead to high righting or raising moments when the blind rivet arrangement is aligned with its rivet longitudinal axis oblique to a longitudinal axis of the joint during setting (at an actual angle of inclination less than a maximum angle of inclination of, for example, 15°, in particular less than 10°).

Here, there is essentially no radial expansion of the rivet shank within the through opening in the workpiece. However, the conical or tapered contact surface makes it possible to ensure that, in the region of the contact surface, the rivet head always rests on a circumferential edge of the through opening in the visible-side workpiece. Consequently, radial positive engagement can be achieved in respect of the visible-side workpiece.

In respect of the blind-side workpiece (or a plurality of blind-side workpieces), it is possible in the case of relatively thin workpiece arrangements likewise to achieve positive engagement of the lower (blind-side) workpiece by providing the through opening in the blind-side workpiece with a smaller opening diameter than the through opening in the visible-side workpiece.

Here, the ratio of the opening diameters preferably corresponds to the angle at which the contact surface is aligned with respect to a rivet longitudinal axis. In this case, it is possible not only for a circumferential edge of a through opening of the visible-side workpiece but also for a circumferential edge of the through opening of the blind-side workpiece, said edge lying thereunder and facing the visible side, to rest on the contact surface.

Positive or virtually positive contact in the radial direction can be established between the blind-side workpiece and the rivet shank during forming particularly in the case of workpiece arrangements which are relatively thick axially, or this can be achieved if an outside diameter of the rivet shank is almost equal to a preferably identical diameter of the through opening in the blind-side workpiece. The diameters of the through openings in the workpieces can also be identical.

The object is thus fully achieved.

In the blind rivet arrangement according to the invention, it is of particular advantage if a ratio of the axial length of the contact surface to the axial length of the rivet head is less than 0.6, in particular less than 0.4.

The contact surface is furthermore preferably arranged within an axial half of the rivet head which is adjacent to the rivet shank. The ratio of the axial length of the contact surface to the axial length of the rivet head is furthermore preferably less than 0.25, and is preferably greater than 0.1, in particular greater than 0.15.

With the above length ratios, it is possible to ensure that the contact surface is axially relatively short in relation to the axial length of the rivet head and, in particular, is arranged close to the rivet shank. This has the effect that high forces can be absorbed in this region in order, in particular, to be able to achieve high righting (raising) moments.

It is furthermore advantageous if a ratio of the maximum outside diameter to an outside diameter of the rivet shank is greater than 1.2, in particular greater than 1.4.

This ratio is preferably less than 2, in particular less than 1.8.

The head taper angle or oblique angle at which the contact surface of the head underside surface is aligned in relation to a rivet longitudinal axis, is preferably in a range of from 20° to 50°, in particular from 35° to 48°.

Using the abovementioned values, it is possible to produce blind rivet joints in a particularly effective way.

In the case of the finished blind rivet joint, it is preferred if the part of the rivet head which projects relative to the visible surface of the visible-side workpiece, i.e. the projecting section, has an axial length of at least 0.5 mm, in particular of at least 0.75 mm. The axial length of the projecting section is preferably greater than one fifth, in particular greater than one third of the total axial length of the rivet head.

In the case of the blind rivet joint according to the invention, it is furthermore of particular advantage if a diameter of a through opening of the visible-side workpiece is greater than 1.05 times the outside diameter of the rivet shank and/or less than 1.4 times the outside diameter of the rivet shank.

It is furthermore advantageous if the formed blind rivet arrangement rests both on the blind-side workpiece and on the visible-side workpiece in the radial direction, with the result that the workpieces are joined positively to one another in the radial direction, as already explained above.

It is furthermore preferred, in the case of the blind rivet joint according to the invention, if the folding-body blind rivet arrangement is designed to enable workpiece arrangements of different thicknesses to be riveted, as has already been explained above.

Overall, at least one of the following advantages is preferably achieved and/or one of the following features is preferably implemented by means of the invention. A rivet head of a blind rivet arrangement is preferably embodied so as to be conical. The rivet head is preferably introduced into workpiece arrangements, the visible-side workpiece of which has a hole, which is preferably embodied so as to be cylindrical. In some embodiments, however, the hole of the through opening in the visible-side workpiece can also be embodied as a countersink.

A total taper angle of a contact segment of a head underside surface can be an acute angle or an obtuse angle. Alternatively, the cone can also be embodied so as to be spherical or arc-shaped or even to resemble a fillet. The circumferential surface or head underside surface can be ribbed, in particular with longitudinal ribs, or can have contours that are raised or recessed in some other way. Apart from a hole for the passage of a rivet mandrel, the cone of the rivet head is preferably embodied as a solid cone. However, recesses in the cone or other weak points in the cone, e.g. slots, can be provided with the aim of enlarging the visible-side rivet head formation.

As the folding-body blind rivet arrangement is set with the conical or spherical contact surface, double positive engagement is preferably obtained by enclosure of the circumferential edge on the blind-side surface of the blind-side workpiece by the transition from the closing head (blind head) to the rivet shank and simultaneous enclosure by a preferably local deformation of the conical or spherical contact surface on the circumferential edge on the visible-side surface of the visible-side workpiece and/or by deformation on this circumferential edge itself.

However, in some blind rivet joints created by means of the blind rivet arrangement according to the invention, it is also possible for there to be only a single positive engagement on one of the two circumferential edges described above.

By means of the blind rivet arrangement according to the invention, large rivet hole tolerances can be compensated. Moreover, a blind-side through opening can be significantly smaller than a visible-side through opening.

Even if a rivet setting device tilts over the entire clamping length region of the rivet during a riveting operation (actual inclination), a reliable and good blind rivet joint with high tensile strengths of the head can nevertheless be achieved.

Reliable operation and a good blind rivet joint is preferably achieved, despite a large number of variables, by virtue of the fact that the conical or spherical contact surface comes to rest on the circumferential edge of the visible-side surface of the visible-side workpiece, either at a higher position (as seen axially) or at a lower position on the contact surface.

A combination of a conical rivet head and a folding-body blind rivet promotes righting (raising) behaviour of the blind rivet during a riveting operation in the case of a riveting device capable of corrective adjustment. The righting moment of a folding-body blind rivet of this kind is significantly greater than with blind rivets with expanding bodies (radially expanding). Since the conical rivet head is significantly deeper in the rivet hole immediately before the rivet setting operation, as compared with blind rivet arrangements with rivet heads that are flat, the disc-shaped closing head (blind head) can already be wider when it makes contact with the blind-side workpiece, as a result of which the moment required for righting the rivet can be higher. In other words, a righting moment of this kind, by means of which the blind rivet arrangement rights itself from an actual inclined position in the direction of a longitudinal axis of the joint while setting during the forming operation, can be used to a greater degree to bring a centre line of a rivet that was previously tilted into alignment with the longitudinal axis of the joint in the rivet hole by corrective adjustment of the rivet setting device.

Since folding-body blind rivet arrangements can preferably have a rivet body with a thinner wall than conventional blind rivet arrangements, all-round contact of the closing head (blind head) on the blind-side workpiece, while the inclined position of the rivet head is simultaneously maintained, is possible, even in riveting operations in which a rivet setting device is hindered from making a corrective adjustment during the riveting operation (retention under constraint). However, such an inclined position of the conical or spherical rivet head can preferably be observed only to the extent that all-round contact between the conical or spherical surface and the edge of the material being joined (circumferential edge) on the visible-side through opening is nevertheless to be observed. This means that the blind rivet joint exhibits high mechanical load-bearing capacity despite tilting during the rivet setting operation. Riveting points which can be reached only by tilting the riveting device can likewise be reliably riveted.

Particularly in the case of double positive engagement, that is to say where the closing head (blind head) is on the blind-side workpiece and the conical or spherical rivet head is on the visible-side workpiece, this blind rivet arrangement can centre components in an ideal manner relative to one another.

If a preferred double positive engagement is achieved, that is to say where the closing head (blind head) is on the blind-side workpiece and the conical or spherical rivet head is on the visible-side workpiece, the finished blind rivet joint offers high resistance to the passage of water through the rivet hole. Owing to the fact that a complete annular segment of the conical or spherical contact surface makes contact with the circumferential edge of the visible-side surface of the visible-side workpiece, significantly better sealing is achieved as compared with flat-headed rivet heads owing to increased unit surface pressure.

It goes without saying that the features mentioned above and those which remain to be explained below can be used not only in the respectively indicated combination but also in other combinations or in isolation without exceeding the scope of the present invention.

Illustrative embodiments of the invention are shown in the drawing and are explained in greater detail in the following description. In the drawing:
- Fig. 1: shows a view of one embodiment of a blind rivet arrangement according to the invention;
- Fig. 2: shows a longitudinal section through a blank rivet body for the blind rivet arrangement in Fig. 1;
- Fig. 3: shows a view of a rivet mandrel of the blind rivet arrangement in Fig. 1;
- Fig. 4: shows a schematic longitudinal section through a blind rivet joint, which is implemented by means of the blind rivet arrangement in Figures 1 to 3;
- Fig. 5: shows another schematic view of a finished blind rivet joint, which corresponds to that in Fig. 4;
- Fig. 6: shows an illustration, comparable to that in Fig. 5, of another embodiment of a blind rivet joint, in which a workpiece arrangement of greater axial thickness than that in Fig. 5 is joined;
- Fig. 7: shows a side view and a longitudinal section through a blind rivet arrangement which corresponds to that in Figures 4 and 5;
- Fig. 8: shows illustrations, comparable to Fig. 7, of another blind rivet joint using the same blind rivet arrangement but different through opening diameters; and
- Fig. 9: shows illustrations, comparable to Fig. 7, of a blind rivet joint with a workpiece arrangement which is thicker axially.

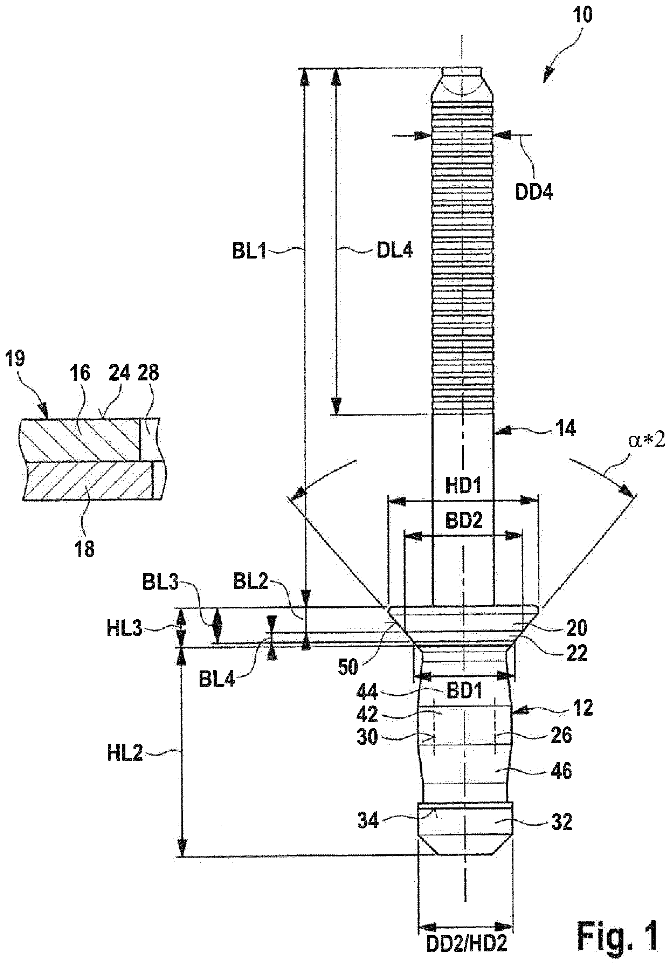

A first embodiment of a blind rivet arrangement according to the invention is shown schematically in Figs 1 to 3 and is denoted in general by 10.

The blind rivet arrangement 10 has a rivet body 12 and a rivet mandrel 14. The blind rivet arrangement 10 can be used to join a workpiece arrangement 19 which comprises at least one first workpiece 16 (visible-side workpiece) and one second workpiece 18 (blind-side workpiece).

In a manner known per se the rivet body 12 has a rivet head 20, which comprises a contact surface 22 for contact with the visible-side workpiece 16. In the present case, the contact surface 22 is designed as a conical surface, having an overall taper angle 2xa = 80°, with the result that the conical surface is aligned at an angle α = 40° in relation to a rivet longitudinal axis.

A visible-side surface of the visible-side workpiece 16 is shown at 24 in Fig. 1.

The rivet head 20 merges into a rivet shank 26, which can be introduced into a workpiece hole 28 in the workpiece arrangement 19. An axially continuous rivet hole 30 (indicated schematically in Fig. 1) passes through the rivet body 12.

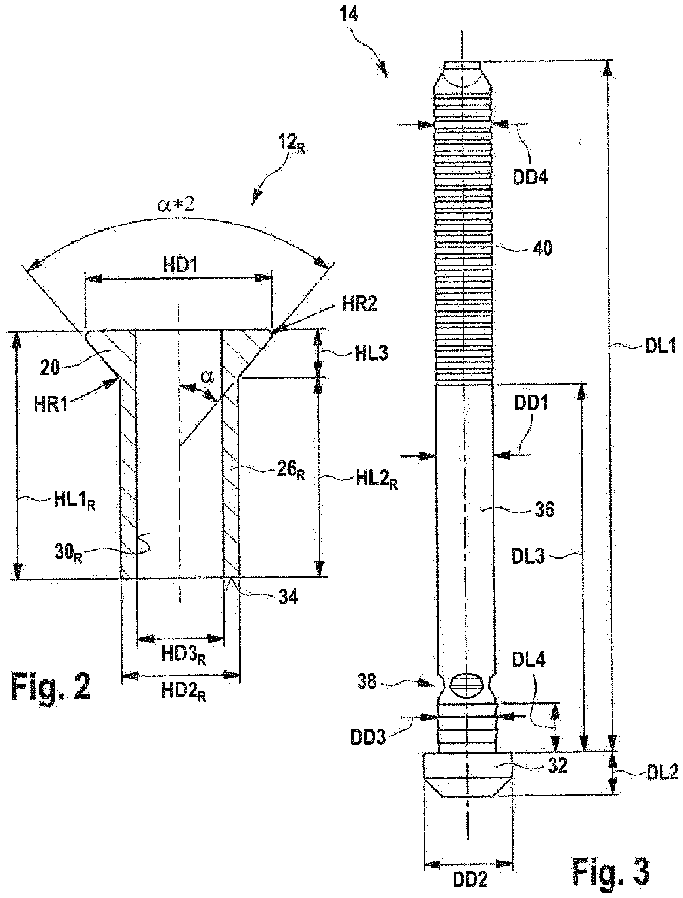

The mandrel 14, which is shown with greater accuracy in Fig. 3, has a mandrel head 32, which is designed for positive contact with an end 34 of the rivet shank 26. The mandrel 14 furthermore has a mandrel shank 36, which is passed through the rivet hole 30 and extends out of the rivet head 20 on the visible side. The rivet mandrel 14 furthermore has a predetermined breaking point 38, which is shown schematically in Fig. 3. The rivet mandrel 14 furthermore has, on its side remote from the mandrel head 32, a withdrawal section 40, which can preferably be provided with circumferential grooves to enable a tool to grip the mandrel more effectively when a setting operation is being carried out.

A rivet body blank 12_{R}, which can be used to produce the rivet body shown in Fig. 1, is shown in Fig. 2.

The rivet body blank 12_{R} comprises a conical rivet head 20 and a rectilinear rivet shank 26_{R} having a continuous rivet hole 30_{R}.

The rivet body blank 12_{R} has a total length HL1_{R} of the rivet body blank. This is divided into a shank length HL2_{R} and a head length HL3 of the rivet body. HL2_{R} is at least twice, in particular at least three times, as great as HL3.

The conical surface of the rivet head 20 merges via an under-head radius HR1 of the rivet body into an outside diameter HD2_{R} of the rivet shank 26_{R}. The conical surface of the rivet head 20 furthermore merges via a head transition radius HR2 of the rivet body into a head upper side aligned substantially transversely to the rivet longitudinal axis. An inside diameter of the shank of the rivet body blank is shown at HD3_{R}. The maximum outside diameter of the rivet head is indicated as the outside diameter HD1 of the rivet body head in Fig. 2.

For the blind rivet arrangement 10, the rivet body blank 12_{R} is formed such that the rivet shank 26 has an axially central section 42 and two transitional sections 44, 46 adjoining said central section axially on opposite sides (Fig. 1). The outside diameter of the central section 42 is equal to a maximum outside diameter HD2 of the rivet shank 26. The transitional sections 44, 46 are each formed in such a way that they taper conically towards opposite axial ends of the rivet shank 26, starting from the central section 42. The rivet body shank length HL2 is preferably shorter than the shank length HL2_{R} of the rivet body blank.

In the shaped rivet body 12, the shape of the rivet head 20 is the same as that of the rivet body blank 12_{R}.

As illustrated in Fig. 1, the first transitional section 44, which is adjacent to the rivet head 20, merges via a diameter less than the outside diameter HD2 of the shank of the rivet body into the conical surface, which then also defines the head taper of the rivet head 20. The contact surface 22 extends in an axial direction from a contact surface minimum diameter BD1, which is greater than the outside diameter HD2 of the shank of the rivet body, in the direction of the upper side of the rivet head 20, as far as a contact surface maximum diameter BD2, which is also referred to as an intermediate outside diameter. The resulting axial length BL4 of the contact surface 22 is preferably less than a minimum length BL2 of the protruding section of the head, which includes the axial section of the head taper which extends from the contact surface maximum diameter BD2 to the outside diameter HD1 of the rivet body head. This protruding section is denoted by 50 in Fig. 1.

The above-defined contact surface 22 with the axial length BL4 is an idealized contact surface 22, which leaves out of account a deformation of the rivet head 20 and/or of the visible-side workpiece 16 in the region of the through opening, and furthermore leaves out of account any inclination of the blind rivet arrangement 10 during a setting operation. In practice, it can very well happen that a circumferential edge of the through opening 28 in the workpiece in the region of the visible-side surface 24 makes contact with the head taper in the set state in the region of the protruding section 50, whether owing to inclination of the rivet head 20 or owing to deeper recessing of the rivet head 20 into the workpiece arrangement 19 owing to deformation of the rivet head 20 and/or of the workpiece arrangement 19.

Consequently, the contact surface minimum diameter BD1 fundamentally corresponds to a minimum diameter of the undeformed through opening 28 in the workpiece in the region of the visible-side surface, i.e. in the region of the circumferential edge thereof, wherein the through opening 28 in the workpiece is preferably continuously cylindrical or cylindrical in some section or sections.

The contact surface maximum diameter BD2 corresponds to the maximum diameter of the through opening 28 in the region of the visible-side surface 24.

Consequently, the concept of the contact surface 22 is initially illustrated in an idealized way above, but in practice the rivet head 20 can be supported on the workpiece arrangement 19 at the maximum over the entire region of the conical surface when there are instances of inclination or deformations.

The mandrel shown in Figures 1 and 3 has a mandrel shank length DL1 and an adjoining mandrel closing head length DL2. The mandrel shank length DL1 comprises a first mandrel shank section length DL3, which extends from the mandrel head 32 to the withdrawal section 40. A second mandrel shank section length DL4 extends from the mandrel head 32 to the predetermined breaking point 38. In this axial region of the second mandrel shank section length DL4, the outer circumference is formed in the manner of oblique grooves, such that there is a certain basic retention force established in this region between the rivet body 12 and the mandrel shank 36, preventing the rivet body 12 from accidentally being released from the mandrel 14, e.g. during transportation in bulk or the like.

The normal outside diameter of the mandrel shank 36 is shown at DD1. An outside diameter of the closing head of the mandrel is shown at DD2. This corresponds to the outside diameter HD2 of the shank of the rivet body as indicated in Fig. 1.

An outside diameter DD3 of the mandrel/body contact section is furthermore shown in Fig. 3, said diameter being matched to a shank inside diameter HD3 of the rivet body for the abovementioned reasons in order to establish the basic retention force. Finally, an outside diameter of the withdrawal section 40 is shown at DD4.

To produce a blind rivet joint, the rivet shank 26 is inserted into the through opening 28 in the workpiece. An axial withdrawal force is then exerted on the mandrel 14, and the rivet head 20 is held by means of a second force, which is opposed to the axial withdrawal force and is greater than the axial withdrawal force.

Through the contact of the mandrel head 32 on the end 34 of the rivet shank 26, said shank is deformed on the blind side, with the result that an outward fold is formed, which is a blind head with a larger diameter than the diameter of the through opening 28 in the workpiece on the blind side. As the first force continues to be exerted, this folded blind head shifts axially until it comes up against the blind-side surface of the blind-side workpiece 18 and rests against this surface. At the same time, the first force is furthermore adjusted or increased in such a way that, once the blind head is finished and an axial clamping force has been established between the rivet head 20 and the blind head, the mandrel 14 breaks at the predetermined breaking point 38 and can be pulled out of the finished blind rivet joint.

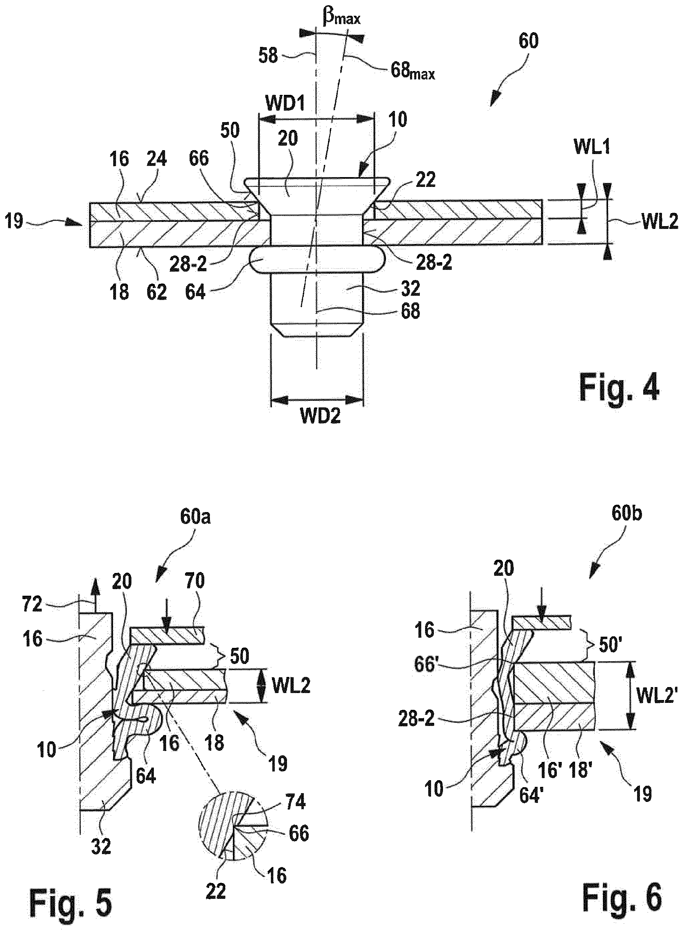

A blind rivet joint finished in this way is shown at 60 in Fig. 4, wherein a workpiece arrangement 19, the through opening 28 in the workpiece of which defines a longitudinal axis 58 of the joint, is shown.

It can be seen that a blind head 64 has formed, which rests on the blind-side surface 62 of the blind-side workpiece 18.

The through opening 28 in the workpiece is divided into a first through opening 28-1 in the visible-side workpiece 16, having a first opening diameter WD1, and a second through opening 28-1, having a second opening diameter WD2, which is smaller than the first opening diameter WD1. Both through openings are of cylindrical design.

The axial thickness of the visible-side workpiece 16 is shown at WL1. The total thickness of the workpiece arrangement 19 is shown at WL2.

The contact surface 22 of the rivet head 20 rests on a circumferential edge 66 of the first through opening 28-1 in the region of the visible-side surface 24.

Fig. 4 shows that a rivet longitudinal axis 68 extends parallel to the longitudinal axis 58 of the joint. However, the blind rivet arrangement 10 can also be aligned at an angle of inclination β in relation to the longitudinal axis 58 of the joint, wherein the angle of inclination is a maximum of βₘₐₓ, corresponding to a maximum inclination of the rivet longitudinal axis 68ₘₐₓ, as indicated in Fig. 4. The angle βₘₐₓ can be in a range of from 5° to 15°, for example.

Preferred figures for the dimensions discussed above are listed in the following table.

| Reference sign | Meaning | Preferred range (mm) | Example (mm) |
|---|---|---|---|
| HL1_{R} | total length of rivet body blank | 5 to 25 | 12.8 |
| HL2 | rivet body shank length | 4 to 20 | 10.3 |
| HL3 | rivet body head length | 1.5 to 4 | 2.5 |
| HR1 | under-head radius of rivet body | 0.1 to 1.0 | 0.6 |
| HR2 | head transition radius of rivet body | 0.05 to 0.75 | 0.3 |
| HD1 | outside diameter of rivet body head | 5 to 20 | 9.5 |
| HD2_{R} | shank outside diameter of rivet body blank | 4 to 8 | 5.93 |
| HD3_{R} | shank inside diameter of rivet body blank | 2.5 to 6.5 | 4.33 |
| HD2 | shank outside diameter of rivet body | 4 to 8 | 6.0 |
| α | head taper angle | 40° to 120° | 80° |
| βₘₐₓ | maximum angle of inclination | 5° to 15° | 10° |
| DL1 | mandrel shank length | 15 to 70 | 48.0 |
| DL2 | closing head length of mandrel | 1.5 to 6 | 3.0 |
| DL3 | first section length of mandrel shank | 15 to 45 | 25.0 |
| DL4 | second section length of mandrel shank | 2 to 5.5 | 3.4 |
| DD1 | outside diameter of mandrel shank | 2.5 to 6.5 | 3.86 |
| DD2 | outside diameter of mandrel closing head | 4 to 8 | 6.0 |

| | | | |
|---|---|---|---|
| DD3 | outside diameter of mandrel/body contact section | 3.0 to 7.0 | 4.12 |
| DD4 | outside diameter of second mandrel shank section length | 2.5 to 6.5 | 3.9 |
| BL1 | protruding length of blind rivet mandrel | 5 to 60 | 35.0 |
| BL2 | minimum protruding section length of blind rivet head | 0 <BL2 < BL3 | 1.65 |
| BL3 | maximum protruding section length of blind rivet head | HL3 < BL3 | 2.2 |
| BL4 | axial length of contact surface | BL3 - BL2 | 0.55 |
| BD1 | minimum diameter of contact surface | BD1 > HD2 | 6.5 |
| BD2 | maximum diameter of contact surface | HD1 > BD2 | 7.5 |
| WL1 | minimum axial thickness of visible-side workpiece | > 0.75 | 1.2 |
| WL2 | thickness of workpiece arrangement | 1.0 - 10, especially 2-5 | 2-5 |
| WD1 | through diameter of visible-side workpiece | BD2 > WD1 > BD1 | 7.5 |
| WD2 | through diameter of blind-side workpiece | WD2 ≤ WD1 | 6.2 |

In Figures 5 to 9 below, further embodiments of blind rivet joints are shown, which correspond in general to the blind rivet joint 60 in Fig. 4 as regards construction and operation, and the blind rivet arrangement used therewith from Figures 1 to 3. The fundamental construction of the blind rivet arrangement and the blind rivet joint established thereby correspond in general to the arrangements and joints described above as regards construction and operation. Identical elements are therefore denoted by identical reference signs. It is essentially the differences which are explained below.

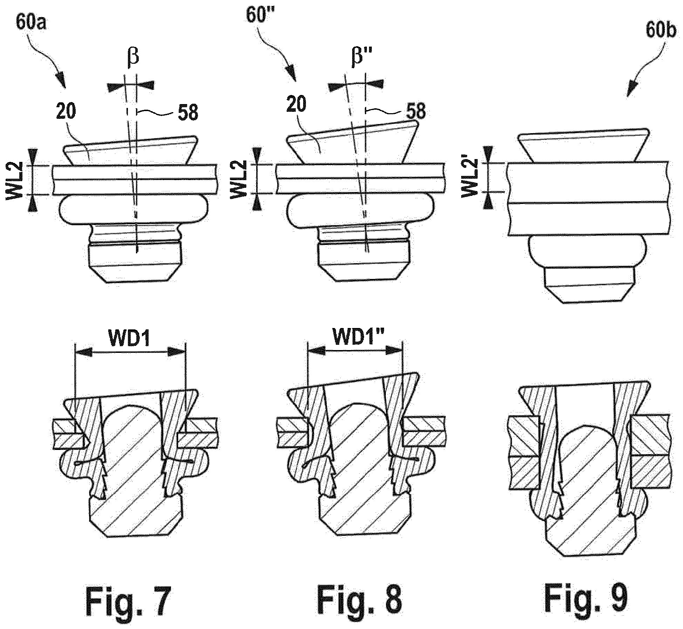

In the case of a blind rivet joint 60a of the kind illustrated in Fig. 5 and in Fig. 7, it can be seen that a first force is exerted on an upper side of the rivet head 20 by means of a holding tool 70 during a blind rivet joining operation, said force being greater than an opposing withdrawal force 72 exerted on the mandrel 14.

In Fig. 5, it can be seen that a relatively thin workpiece arrangement 19 with an axial overall thickness WL2 is joined, namely by means of the blind rivet arrangement 10 shown in Figures 1 to 3. During the forming operation, a blind head 64 has formed from the rivet shank, this being formed as a fold in the body and resting on a blind-side surface of the blind-side workpiece 18. In this embodiment, the blind head 64 can rest exclusively axially on the blind-side workpiece 18 in order in this way to set up a clamping force between the blind head 64 and the rivet head 20, said force holding the workpieces 16, 18 together in the axial direction.

Owing to the relatively small overall thickness WL2, the contact surface 22 of the head taper extends into the workpiece through opening 28, this opening being defined by two different opening diameters WD1, WD2, in a manner similar to that shown in Fig. 4. Here, the contact surface 22 rests, on the one hand, on a circumferential edge 66 of the visible-side workpiece 16 in the region of the visible-side surface 24 thereof, as shown in detail in Fig. 5. As shown in Fig. 5, this annular segment 74 which rests on the circumferential edge 66 can extend over the entire circumference of the circumferential edge 66. A deformation of the kind indicated schematically in Fig. 5 may furthermore have occurred in the region of the head taper or contact surface 22. Alternatively, the head taper may have deformed the circumferential edge 66, or deformations may have occurred on both components owing to the setting operation. In all cases, the visible-side workpiece 16 is fixed positively in relation to the blind rivet arrangement 10 in the radial direction through the contact of the annular segment 74 with the circumferential edge 66.

As illustrated in Fig. 5, the head taper extends so far into the through opening in the workpiece that the head taper also rests on a visible-side circumferential edge of the second through opening 28-2 in the blind-side workpiece 18, with the result that the blind-side workpiece 18 is also fixed positively in relation to the blind rivet arrangement 10 in the radial direction. Consequently, the workpieces 16, 18 are not only fixed positively to one another in the axial direction by means of the blind rivet arrangement 10 but also fixed against one another in the radial direction.

Here, Fig. 7 shows that the rivet head 20 can slope relative to a longitudinal axis 58 of the joint at an actual angle of inclination β.

The actual angle of inclination of the rivet head 20 can be a permanent angle of inclination, wherein the wedge-shaped surface of the rivet head enables the latter to rest on the circumferential edge 66, preferably over the full circumference, despite the inclination, thus making it possible to ensure sealing and a high clamping force even in this case.

A configuration of this kind can be obtained, for example, when corrective adjustment of a blind riveting tool does not take place or is not possible during the setting operation. Despite a resulting inclination during the rivet setting operation, a blind rivet joint with high quality standards can be produced.

Another blind rivet joint is shown in Figures 6 and 9 and is denoted in general there by 60b.

In the case of the blind rivet joint 60b, a workpiece arrangement 19' which has a significantly larger axial overall thickness WL2' is used.

Thus, when using the same blind rivet arrangement 10 in Figures 1 to 3, a blind rivet joint is established in which a blind head 64' is formed which forms a fold in the body with a significantly smaller axial outside diameter, wherein the blind head 64' here presses in the radial direction against the blind-side circumferential edge of the second through opening 28-2 in the blind-side workpiece 18', with the result that the blind-side workpiece 18' is fixed positively in the radial direction by the blind head 64'.

Once again, the conically tapered surface of the rivet head 20 enters the first through opening (not designated specifically in Fig. 6) in the visible-side workpiece 16' but does not extend into the second through opening 28-2.

The visible-side workpiece 16' furthermore has a through opening 28-1 (not designated specifically in Fig. 6) having a first opening diameter, which is equal to the second opening diameter of the second through opening 28-2. Consequently, the blind rivet arrangement 10 does not enter as deeply into the through opening 28 in the workpiece, with the result that the protruding section 50' is larger than in blind rivet joint 60a.

A similar forming process to that in Fig. 5 can have taken place in the region of the circumferential edge 66'. In all cases, positive engagement in the radial direction between the visible-side workpiece 16' and the blind rivet arrangement 10 can also be established through the engagement of the conical contact surface 22 on the circumferential edge 66', with the result that not only axial positive engagement between the rivet head 20 and the blind head 64' but also radial positive engagement between the workpieces 16', 18' is also established in blind rivet joint 60b.

Another variant of a blind rivet joint 60" is shown in Fig. 8, said joint having the same axial overall thickness of the workpiece arrangement as the embodiment in Figures 5 and 7 (WL2). In blind rivet joint 60", however, the first opening diameter is equal to the second opening diameter and consequently smaller than in blind rivet joint 60a. Consequently, the rivet head does not enter so deeply into the through opening 28 in the workpiece. However, it can be seen that, here too, there is an inclination with a further angle of inclination β" relative to a longitudinal axis 58 of the joint, with the rivet head 20 being permanently slanted and, at the same time, a blind rivet joint 60" of high quality being established. Here too, axial positive engagement is established. Radial positive engagement is furthermore also established since, as can be seen in the sectional view in Fig. 8, the blind head rests radially on the blind-side circumferential edge of the second through opening.

In all the embodiments, at least one of the following advantages or possible uses is achieved.

On the one hand, positive engagement on the rivet head in the radial direction as well can be achieved, even if the first opening diameters vary (hole tolerances, shape errors etc.), even if the first opening diameter is greater than a second opening diameter of a blind-side workpiece, more specifically over the entire clamping length region specified for the blind rivet arrangement.

The result is consequently a high lateral displacement force without initial sliding of the workpieces of the workpiece arrangement. The method according to the invention tolerates tilting during manual riveting, i.e. inclined positions up to a maximum angle of inclination. Consequently, good riveted joints are possible in riveting locations to which access is difficult, even in the case of inclined positions. In this way, complex corrective adjustments of the rivet head on fully automatic riveting systems can be eliminated.

A conical rivet head on a folding-body blind rivet thus offers optimum conditions for setting up the rivet during a riveting operation. At the same time, however, there can be instances of permanent inclination of the rivet head, which do not lead to quality limitations.

In comparison with flat-headed rivet heads, the conical rivet head requires less installation space on the visible side.

The conical shape allows rapid removal, e.g. by drilling, of the blind rivet arrangement of a finished blind rivet joint without damaging the quality of the joint. Enhanced water-tightness can be obtained by virtue of the annular sealing between the circumferential edge 66 and the annular segment 74, more specifically by virtue of the high unit surface pressures in this region.

The components can be aligned, i.e. centred, relative to one another by means of the conical shape.

Compared with standard blind rivet arrangements, blind rivet arrangements having a conical head do not require special or different manufacturing technology.

## Claims

1. Blind rivet joint (60) having a workpiece arrangement (19) which includes at least one visible-side workpiece (16) and one blind-side workpiece (18), and having a formed set blind rivet arrangement (10) formed from a blind rivet arrangement (10) which comprises a rivet body (12) and a mandrel (14), wherein the rivet body (12) has a rivet head (20), a rivet shank (26) and a rivet hole (30), wherein the mandrel (14) has a mandrel head (32) and a mandrel shank (36), which is introduced into the rivet hole, with the result that the mandrel head (32) rests positively on the rivet shank (26), wherein the rivet head (20) has a head underside surface which faces the rivet shank (26) and, adjacent to the rivet shank (26), has a head minimum outside diameter (HD2) and, remote from the rivet shank (26), has a head maximum outside diameter (HD1), wherein one section of the head underside surface, which is arranged from an intermediate outside diameter (BD2) between the head minimum outside diameter and the head maximum outside diameter towards a contact surface minimum diameter (BD1) which is greater than the head minimum outside diameter (HD2), is a contact surface (22) for a visible-side circumferential edge (66) of a through opening (28) in the visible-side workpiece (16) of the workpiece arrangement (19) riveted by means of the set blind rivet arrangement (10), wherein an annular segment (74) of the contact surface (22) rests on a circumferential edge (66) of the through opening (28) in the visible-side workpiece (16), wherein a part (50) of the rivet head (20) projects relative to a visible surface (24) of the visible-side workpiece (16) and wherein the rivet head (20) projects some way into the through opening (28) in the visible-side workpiece (16).

2. Blind rivet joint according to Claim 1, **characterized in that** a ratio of the axial length (BL4) of the contact surface to the axial length (HL3) of the rivet head (20) is less than 0.6, in particular less than 0.4.

3. Blind rivet joint according to Claim 1 or 2, **characterized in that** a ratio of the head maximum outside diameter (HD1) to an outside diameter (HD2) of the rivet shank is greater than 1.2, in particular greater than 1.4.

4. Blind rivet joint according to one of Claims 1-3, **characterized in that** an angle (a) at which the contact surface is aligned relative to a rivet longitudinal axis (68) is in a range of from 20° to 50°.

5. Blind rivet joint according to any of Claims 1-4, wherein a diameter of the through opening (28-1) of the visible-side workpiece (16) is greater than 1.05 times an outside diameter (HD2) of the rivet shank (26) and/or less than 1.4 times the outside diameter (HD2) of the rivet shank (26).

6. Blind rivet joint according to any of claims Claims 1-5, wherein the formed blind rivet arrangement (10) rests both on the blind-side workpiece (18) and on the visible-side workpiece (16) in the radial direction, with the result that the workpieces (18, 16) are joined positively to one another in the radial direction.

7. Blind rivet joint according to any of Claims 1-6, wherein the folding-body blind rivet arrangement (10) is designed to enable workpiece arrangements (19) of different thicknesses (WL2) to be riveted.

8. Method for producing a blind rivet joint (60), in which a workpiece arrangement including at least one visible-side workpiece (16) and one blind-side workpiece (18) is joined by means of a folding-body blind rivet arrangement (10), which comprises a rivet body (12) and a mandrel (14)), wherein the rivet body (12) has a rivet head (20), a rivet shank (26) and a rivet hole (30), wherein the mandrel (14) has a mandrel head (32) and a mandrel shank (36), which is introduced into the rivet hole, with the result that the mandrel head (32) rests positively on the rivet shank (26), wherein the rivet head (20) has a head underside surface which faces the rivet shank (26) and, adjacent to the rivet shank (26), has a minimum outside diameter (HD2) and, remote from the rivet shank (26), has a maximum outside diameter (HD1),
wherein
one section of the head underside surface, which is arranged from an intermediate outside diameter (BD2) between the minimum outside diameter and the maximum outside diameter towards the minimum outside diameter (HD2), is designed as a contact surface (22) for a visible-side circumferential edge (66) of a through opening (28) in the workpiece arrangement (19) to be riveted by means of the blind rivet arrangement (10), having the following steps:
- making available the visible-side and the blind-side workpiece (16, 18), wherein the visible-side workpiece (16) has a first through opening (28-1) having a first opening diameter (WD1) and wherein the blind-side workpiece (18) has a second through opening (28-2) having a second opening diameter (WD2), wherein the through openings (28-1, 28-2) define a longitudinal axis (58) of the joint,
- introducing the as yet unformed blind rivet arrangement into the through openings (28-1, 28-2), wherein the blind rivet arrangement (10) has the rivet head (20) having a contact surface (22), which slopes relative to a rivet longitudinal axis (68) and which is of a size matched to the first opening diameter (WD1) in such a way that at least a partial annular segment of the contact surface (22) rests on the circumferential edge (66) of the first through opening (28-1), said edge being formed on a visible surface (24) of the visible-side workpiece (16), wherein an actual angle of inclination (β) between the longitudinal axis (58) of the joint and the rivet longitudinal axis (68) is less than a maximum angle of inclination (βₘₐₓ);
- forming the blind rivet arrangement (10) to produce the blind rivet joint (60), wherein a blind-side rivet head (64) is formed, which engages behind a blind-side surface (62) of the blind-side workpiece (18), wherein, in the case of an actual angle of inclination of greater than or equal to 0°, a complete annular segment (74) of the contact surface (22) rests on the circumferential edge (66) of the first through opening (28-1) and a part (50) of the rivet head (20) projects relative to the visible surface of the visible-side workpiece.

## Patentansprüche

1. Blindnietverbindung (60), die eine Werkstückanordnung (19) aufweist, die mindestens ein Werkstück (16) an der sichtbaren Seite und ein Werkstück (18) an der verdeckten Seite beinhaltet und eine gebildete gesetzte Blindnietanordnung (10) aufweist, die von einer Blindnietanordnung (10) gebildet wird, die einen Nietenkörper (12) und einen Dorn (14) umfasst, wobei der Nietenkörper (12) einen Nietenkopf (20), eine Nietenschaft (26) und ein Nietenloch (30) aufweist, wobei der Dorn (14) einen Dornkopf (32) und einen Dornschaft (36) aufweist, der in das Nietenloch eingesetzt wird, mit dem Ergebnis, dass der Dornkopf (32) positiv an dem Nietenschaft (26) rastet, wobei der Nietenkopf (20) eine Kopfunterseitenoberfläche aufweist, die zu dem Nietenschaft (26) zeigt, und angrenzend an den Nietenschaft (26) einen Kopfmindestaußendurchmesser (HD2) aufweist und fern von dem Nietenschaft (26) einen Kopfhöchstaußendurchmesser (HD1) aufweist, wobei ein Abschnitt der Kopfunterseitenoberfläche, der von einem Zwischenaußendurchmesser (BD2) zwischen dem Kopfmindestaußendurchmesser und dem Kopfhöchstaußendurchmesser zu einem Kontaktoberflächenmindestdurchmesser (BD1) eingerichtet ist, der größer als der Kopfmindestaußendurchmesser (HD2) ist, eine Kontaktoberfläche (22) für eine Umfangskante (66) an der sichtbaren Seite einer Durchlassöffnung (28) in dem Werkstück (16) an der sichtbaren Seite der Werkstückanordnung (19) ist, die mittels der gesetzten Blindnietanordnung (10) vernietet ist, wobei ein ringförmiges Segment (74) der Kontaktoberfläche (22) an einer Umfangskante (66) der Durchlassöffnung (28) in dem Werkstück (16) an der sichtbaren Seite rastet, wobei ein Teil (50) des Nietenkopfes (20) sich relativ zu einer sichtbaren Oberfläche (24) des Werkstücks (16) an der sichtbaren Seite fortsetzt und wobei der Nietenkopf (20) sich ein Stück in die Durchlassöffnung (28) in dem Werkstück (16) an der sichtbaren Seite fortsetzt.

2. Blindnietverbindung nach Anspruch 1, **dadurch gekennzeichnet, dass** ein Verhältnis der Achslänge (BL4) der Kontaktoberfläche zu der Achslänge (HL3) des Nietenkopfs (20) geringer als 0,6 ist, insbesondere geringer als 0,4.

3. Blindnietverbindung nach Anspruch 1 oder 2, **dadurch gekennzeichnet, dass** ein Verhältnis des Kopfhöchstaußendurchmessers (HD1) zu einem Außendurchmesser (HD2) des Nietenschafts größer als 1,2 ist, insbesondere größer als 1,4.

4. Blindnietverbindung nach einem der Ansprüche 1-3, **dadurch gekennzeichnet, dass** ein Winkel (a) bei dem die Kontaktoberfläche relativ zu einer Nietlängsachse (68) ausgerichtet ist, in einem Bereich von 20° bis 50° liegt.

5. Blindnietverbindung nach einem der Ansprüche 1-4, wobei ein Durchmesser der Durchlassöffnung (28-1) des Werkstücks (16) an der sichtbaren Seite größer als 1,05-mal ein Außendurchmesser (HD2) des Nietenschafts (26) und/oder geringer als 1,4-mal der Außendurchmesser (HD2) des Nietenschafts (26) ist.

6. Blindnietverbindung nach einem der Ansprüche 1-5, wobei die gebildete Blindnietanordnung (10) sowohl an dem Werkstück (18) an der verdeckten Seite als auch an dem Werkstück (16) an der sichtbaren Seite in der Radialrichtung rastet, mit dem Ergebnis, dass die Werkstücke (18, 16) positiv miteinander in der Radialrichtung verbunden sind.

7. Blindnietverbindung nach einem der Ansprüche 1-6, wobei die Faltkörperblindnietanordnung (10) gestaltet ist, Werkstückanordnungen (19) unterschiedlicher Dicken (WL2) zu ermöglichen, vernietet zu werden.

8. Verfahren zur Herstellung einer Blindnietverbindung (60), in dem eine Werkstückanordnung, die mindestens ein Werkstück (16) an der sichtbaren Seite und ein Werkstück (18) an der verdeckten Seite beinhaltet, mittels einer Faltkörperblindnietanordnung (10) verbunden ist, die einen Nietenkörper (12) und einen Dorn (14) umfasst, wobei der Nietenkörper (12) einen Nietenkopf (20), einen Nietenschaft (26) und ein Nietenloch (30) aufweist, wobei der Dorn (14) einen Dornkopf (32) und einen Dornschaft (36) aufweist, der in das Nietenloch eingesetzt wird, mit dem Ergebnis, dass der Dornkopf (32) positiv an dem Nietenschaft (26) rastet, wobei der Nietenkopf (20) eine Kopfunterseitenoberfläche aufweist, die zu dem Nietenschaft (26) zeigt, und angrenzend an den Nietenschaft (26) einen Mindestaußendurchmesser (HD2) aufweist und fern von dem Nietenschaft (26) einen Höchstaußendurchmesser (HD1) aufweist,
wobei
ein Abschnitt der Kopfunterseitenoberfläche, der von einem Zwischenaußendurchmesser (BD2) zwischen dem Mindestaußendurchmesser und dem Höchstaußendurchmesser zu dem Mindestaußendurchmesser (HD2) eingerichtet ist, als eine Kontaktoberfläche (22) für eine Umfangskante (66) an der sichtbaren Seite einer Durchlassöffnung (28) in der Werkstückanordnung (19) gestaltet ist, die mittels der Blindnietanordnung (10) zu vernieten ist, aufweisend die folgenden Schritte:
- Verfügbarmachen des Werkstücks (16, 18) an der sichtbaren Seite und an der verdeckten Seite, wobei das Werkstück (16) an der sichtbaren Seite eine erste Durchlassöffnung (28-1) aufweist, die einen ersten Öffnungsdurchmesser (WD1) aufweist, und wobei das Werkstück (18) an der verdeckten Seite eine zweite Durchlassöffnung (28-2) aufweist, die einen zweiten Öffnungsdurchmesser (WD2) aufweist, wobei die Durchlassöffnungen (28-1, 28-2) eine Längsachse (58) der Verbindung definieren,
- Einsetzen der bisher ungebildeten Blindnietanordnung in die Durchlassöffnungen (28-1, 28-2), wobei die Blindnietanordnung (10) den Nietenkopf (20) aufweist, der eine Kontaktoberfläche (22) aufweist, die relativ zu einer Nietenlängsachse (68) geneigt ist und die eine Größe hat, die dem ersten Öffnungsdurchmesser (WD1) auf solche Weise entspricht, dass mindestens ein ringförmiges Teilsegment der Kontaktoberfläche (22) an der Umfangskante (66) der ersten Durchlassöffnung (28-1) rastet, wobei die Kante an einer sichtbaren Oberfläche (24) des Werkstücks (16) an der sichtbaren Seite gebildet ist, wobei ein tatsächlicher Steigungswinkel (ß) zwischen der Längsachse (58) der Verbindung und der Nietenlängsachse (68) geringer als ein Höchststeigungswinkel (βₘₐₓ) ist;
- Bilden der Blindnietanordnung (10), um die Blindnietverbindung (60) herzustellen, wobei ein Nietenkopf (64) an der verdeckten Seite gebildet ist, der hinter einer Oberfläche (62) an der verdeckten Seite des Werkstücks (18) an der verdeckten Seite eingreift, wobei in dem Fall eines tatsächlichen Steigungswinkels größer als oder gleich 0° ein vollständiges ringförmiges Segment (74) der Kontaktoberfläche (22) an der Umfangskante (66) der ersten Durchlassöffnung (28-1) rastet und ein Teil (50) des Nietenkopfes (20) sich relativ zu der sichtbaren Oberfläche des Werkstücks an der sichtbaren Seite fortsetzt.

## Revendications

1. Joint de rivet aveugle (60) présentant un agencement de pièce à usiner (19) qui inclut au moins une pièce à usiner côté visible (16) et une pièce à usiner côté aveugle (18), et présentant un agencement de rivet aveugle (10) formé à partir d'un agencement de rivet aveugle (10) qui comprend un corps de rivet (12) et un mandrin (14), dans lequel le corps de rivet (12) présente une tête de rivet (20), une tige de rivet (26) et un trou de rivet (30), dans lequel le mandrin (14) présente une tête de mandrin (32) et une tige de mandrin (36), qui est introduite dans le trou de rivet, le résultat étant que la tête de mandrin (32) repose de manière positive sur la tige de rivet (26), dans lequel la tête de rivet (20) présente une surface inférieure de tête qui fait face à la tige de rivet (26) et, en un endroit adjacent à la tige de rivet (26), présente un diamètre extérieur minimal de tête (HD2) et, à distance de la tige de rivet (26), présente un diamètre extérieur maximal de tête (HD1), dans lequel une section de la surface inférieure de tête, qui est agencée à partir d'un diamètre extérieur intermédiaire (BD2) entre le diamètre extérieur minimal de tête et le diamètre extérieur maximal de tête vers un diamètre extérieur minimal de surface de contact (BD1) qui est supérieur au diamètre extérieur minimal de tête (HD2), est une surface de contact (22) pour un bord périphérique côté visible (66) d'une ouverture traversante (28) dans la pièce à usiner côté visible (16) de l'agencement de pièces à usiner (19) riveté au moyen de l'agencement de rivet aveugle réglé (10), dans lequel un segment annulaire (74) de la surface de contact (22) repose sur un bord périphérique (66) de l'ouverture traversante (28) dans la pièce à usiner côté visible (16), dans lequel une partie (50) de la tête de rivet (20) fait saillie par rapport à une surface visible (24) de la pièce à usiner côté visible (16) et dans lequel la tête de rivet (20) fait saillie quelque peu dans l'ouverture traversante (28) dans la pièce à usiner côté visible (16).

2. Rivet aveugle selon la revendication 1, **caractérisé en ce qu'**un rapport de la longueur axiale (BL4) de la surface de contact à la longueur axiale (HL3) de la tête de rivet (20) est inférieur à 0,6, en particulier inférieur à 0,4.

3. Joint de rivet aveugle selon la revendication 1 ou 2, **caractérisé en ce qu'**un rapport du diamètre extérieur maximal de tête (HD1) à un diamètre extérieur (HD2) de la tige de rivet est supérieur à 1,2, en particulier supérieur à 1,4.

4. Joint de rivet aveugle selon l'une quelconque des revendications 1 à 3, **caractérisé en ce qu'**un angle (a) selon lequel la surface de contact est alignée par rapport à un axe longitudinal de rivet (68) est dans une plage de 20° à 50°.

5. Joint de rivet aveugle selon l'une quelconque des revendications 1 à 4, dans lequel un diamètre de l'ouverture traversante (28-1) de la pièce à usiner côté visible (16) est supérieur à 1,05 fois un diamètre extérieur (HD2) de la tige de rivet (26) et/ou inférieur à 1,4 fois le diamètre extérieur (HD2) de la tige de rivet (26).

6. Joint de rivet aveugle selon l'une quelconque des revendications 1 à 5, dans lequel l'agencement de rivet aveugle formé (10) repose à la fois sur la pièce à usiner côté aveugle (18) et sur la pièce à usiner côté visible (16) dans la direction radiale, le résultat étant que les pièces à usiner (18, 16) sont reliées l'une à l'autre de manière positive dans la direction radiale.

7. Joint de rivet aveugle selon l'une quelconque des revendications 1 à 6, dans lequel l'agencement de rivet aveugle à corps pliant (10) est conçu pour permettre de riveter des agencements de pièces à usiner (19) d'épaisseurs différentes (WL2).

8. Procédé de fabrication d'un joint de rivet aveugle (60), dans lequel un agencement de pièces à usiner incluant au moins une pièce à usiner côté visible (16) et une pièce à usiner côté aveugle (18) est assemblé au moyen d'un agencement de rivet aveugle à corps pliant (10), qui comprend un corps de rivet (12) et un mandrin (14), dans lequel le corps de rivet (12) présente une tête de rivet (20), une tige de rivet (26) et un trou de rivet (30), dans lequel le mandrin (14) présente une tête de mandrin (32) et une tige de mandrin (36), qui est introduite dans le trou de rivet, le résultat étant que la tête de mandrin (32) repose de manière positive sur la tige de rivet (26), dans lequel la tête de rivet (20) présente une surface inférieure de tête qui fait face à la tige de rivet (26) et, en un endroit adjacent à la tige de rivet (26), présente un diamètre extérieur minimal (HD2) et, à distance de la tige de rivet (26), présente un diamètre extérieur maximal (HD1)
dans lequel
une section de la surface inférieure de tête, qui est agencée à partir d'un diamètre extérieur intermédiaire (BD2) entre le diamètre extérieur minimum et le diamètre extérieur maximum vers le diamètre extérieur minimum (HD2), est conçue comme une surface de contact (22) pour un bord périphérique côté visible (66) d'une ouverture traversante (28) dans l'agencement de pièces à usiner (19) à riveter au moyen de l'agencement de rivet aveugle (10), présentant les étapes suivantes consistant à :
- mettre à disposition les pièces à usiner côté visible et côté aveugle (16, 18), dans lequel la pièce à usiner côté visible (16) présente une première ouverture traversante (28-1) présentant un premier diamètre d'ouverture (WD1) et dans lequel la pièce à usiner côté aveugle (18) présente une seconde ouverture traversante (28-2) présentant un second diamètre d'ouverture (WD2), dans lequel les ouvertures traversantes (28-1, 28-2) définissent un axe longitudinal (58) du joint,
- introduire l'agencement de rivet aveugle non encore formé dans les ouvertures traversantes (28-1, 28-2), dans lequel l'agencement de rivet aveugle (10) présente la tête de rivet (20) présentant une surface de contact (22), qui est inclinée par rapport à un axe longitudinal de rivet (68) et qui est d'une taille appariée au premier diamètre d'ouverture (WD1) de telle sorte qu'au moins un segment annulaire partiel de la surface de contact (22) repose sur le bord périphérique (66) de la première ouverture traversante (28-1), ledit bord étant formé sur une surface visible (24) de la pièce à usiner côté visible (16), dans lequel un angle d'inclinaison réel (β) entre l'axe longitudinal (58) du joint et l'axe longitudinal de rivet (68) est inférieur à un angle d'inclinaison maximum (βₘₐₓ) ;
- former l'agencement de rivet aveugle (10) pour produire le joint de rivet aveugle (60), dans lequel une tête de rivet côté aveugle (64) est formée, qui vient en prise derrière une surface côté aveugle (62) de la pièce à usiner côté aveugle (18), dans lequel, dans le cas d'un angle d'inclinaison réel supérieur ou égal à 0°, un segment annulaire complet (74) de la surface de contact (22) repose sur le bord périphérique (66) de la première ouverture traversante (28-1) et une partie (50) de la tête de rivet (20) fait saillie par rapport à la surface visible de la pièce à usiner côté visible.
